(19) **Europäisches Patentamt**

**European Patent Office**

**Office européen des brevets**

(11) **EP 1 003 041 A2**

(12) **EUROPÄISCHE PATENTANMELDUNG**

(43) Veröffentlichungstag:
24.05.2000 Patentblatt 2000/21

(51) Int. Cl.⁷: **G01P 3/486**

(21) Anmeldenummer: **99120193.0**

(22) Anmeldetag: **09.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **18.11.1998 DE 19853084**

(71) Anmelder:
**W. SCHLAFHORST AG & CO.**
**D-41061 Mönchengladbach (DE)**

(72) Erfinder: **Karsten,Simon**
**41179 Mönchengladbach (DE)**

(54) **Verfahren und Vorrichtung zur berührungslosen Drehzahlmessung eines rotierenden Körpers**

(57) Verfahren und Vorrichtung zur berührungslosen Drehzahlmessung eines rotierenden Körpers, wobei ein von einer Lichtquelle (1) erzeugter Laserlichtstrahl (2) ausgesendet wird und als vom rotierenden Körper reflektiertes Licht von einer Sensoreinrichtung (9) detektierbar ist. Die detektierten Intensitätswerte des reflektierten Lichtes bilden durch unterschiedliches Reflexionsverhalten der jeweils vom Laserlichtstrahl (2) erfassten Oberfläche unterschiedlich hohe Meßpegel (26,27,28,29), und diese Meßpegel (26,27,28,29) werden zur Signalgebung für die Drehzahlermittlung ausgewertet. Zur Verbesserung der Signalgebung wird das Signal aus dem zwischen aufeinanderfolgend detektierten Meßpegeln (26,27;28,29) ermittelten Differenzwert (15, 22) generiert.

Das Verfahren und die Vorrichtung werden zur Drehzahlmessung bei Rotoren in Rotorspinnmaschinen eingesetzt.

FIG. 1

EP 1 003 041 A2

## Beschreibung

Die Erfindung betrifft ein Verfahren nach dem Oberbegriff des Anspruches 1. Ferner betrifft die Erfindung eine Vorrichtung zur Durchführung des Verfahrens.

Nach einem Fadenbruch an einer Spinnstelle wird das Wiederanspinnen des Fadens während der Anlaufzeit des Rotors bei einer bestimmten Drehzahl, die deutlich unter der Spinndrehzahl des Rotors liegt, vorgenommen. Zu einem vorausberechneten Zeitpunkt, an dem der Rotor die jeweilige für das Anspinnen günstigste Drehzahl erreicht hat, führt der Anspinnwagen das automatische Anspinnen des Fadens durch. Nach erfolgreichem Anspinnen erreicht der Rotor seine Spinndrehzahl erst nach einer weiteren Beschleunigungsphase. Die Drehzahlüberwachung und -steuerung und damit eine sichere und genaue Drehzahlmessung ist für den Anspinnvorgang sowie für den Spinnvorgang selbst von wesentlicher Bedeutung. Zur Drehzahlmessung dienen bei Rotorspinneinrichtungen üblicherweise die Stützscheiben, auf denen der Spinnrotor mit seiner Rotorwelle gelagert ist. Eine der beiden nach außen zum Rotor gelegenen Stützscheiben weist an der einer Lichtquelle zugewandten Außenseite Mittel auf, die das auftreffende Licht zeitweise reflektieren oder die Reflexion des Lichtes zeitweise unterbrechen oder verändern. Ein Teil des reflektierten Lichtes der Lichtquelle trifft auf eine Meßeinrichtung und wird in Signale für eine Drehzahlmessung des Rotors umgewandelt.

Aus der DE 195 31 660 A1 sind Reflexionslichttaster bekannt, bei denen das Vorhandensein eines Lichtflecks in einer Bildebene detektiert wird. Zur Erfassung der Drehzahl und von Änderungen der Drehzahl, insbesondere während einer Beschleunigungs- oder Abbremsphase des Rotors, ist das Empfangssystem einer Reflexionslichtschranke auf an einer Oberfläche des rotierenden Körpers gestreutes Reflexlicht des Lichtstrahls eingestellt, und der rotierende Körper besitzt auf der Linie des Lichtstrahls mehrere schwach reflektierende Bohrungen. Die Oberfläche der Stützscheibe wirkt als Bildebene. Wenn der Lichtfleck in eine Öffnung eintaucht, liegt sein Bild deutlich dahinter und wird nicht mehr erkannt. Die bekannte Vorrichtung arbeitet mit Schwellenwerteinstellungen in der Weise, daß der Schwellenwert jeweils mit dem absoluten Wert der Helligkeit des vom rotierenden Körpers reflektierten Lichtes verglichen und das reflektierte Licht in binäre elektrische Impulse umgewandelt wird. Solange der Schwellenwert nicht überschritten bzw. nicht wenigstens erreicht wird, wird kein Zählsignal ausgelöst. Eine Schwellenwertüberschreitung in der absoluten Helligkeit des Reflexlichtes führt dagegen zur Registrierung eines entsprechenden Zählsignals.

Einfall von Fremdlicht und andere Einflüsse wie Verschmutzung können bei der bekannten Vorrichtung zu falscher Signalgebung führen. Die DE 195 31 660 A1 beschreibt den Einbau von Lochblenden im Empfänger, durch den einfallendes Fremdlicht reduziert werden soll. Eine zusätzliche Dunkelpegelschaltung soll dabei der Kompensation von auch dann noch auftretendem Restfremdlicht, das sogar die Lochblenden passiert, durch Nachregelung des Bezugsniveaus dienen. Trotz Blendeneinbaus und ständiger Nachregelung der Schwellenwert- beziehungsweise Bezugsniveaueinstellung kann es weiterhin zu fehlerhafter Signalgebung kommen, wenn die gemessenen Helligkeitswerte wieder in den Bereich der Schwellenwerte fallen. Sobald der Helligkeitswert des Reflexlichtes infolge Verschmutzung der Oberfläche des rotierenden Körpers einen eingestellten Schwellenwert unterschreitet bzw. nicht mehr erreichen kann, wird die Funktion der Meßeinrichtung unsicher bzw. fällt aus. Bei erhöhtem Fremdlichteinfall und damit verbundener Erhöhung des unteren Helligkeitswertes kann es durch Schwellenwertüberschreitung zunächst zu einer fehlerhaften Funktion des Systems kommen.

Es ist Aufgabe der Erfindung, die Signalgebung zur Drehzahlmessung rotierender Körper gegenüber dem bekannten Stand der Technik zu verbessern.

Diese Aufgabe wird durch die Merkmale des Anspruches 1 und des Anspruches 6 gelöst.

Weitere vorteilhafte Ausgestaltungen des Verfahrens sind Gegenstand der Unteransprüche.

Erfindungsgemäß wird das Signal aus dem zwischen detektierten Meßpegeln ermittelten Differenzwert generiert. Verschmutzung des rotierenden Körpers, der Lichtquelle sowie der Empfangseinrichtung wie auch der Einfall von Streulicht oder Fremdlicht wirken sich nicht mehr in der nachteiligen Weise wie bei herkömmlichen Verfahren aus. Derartige Einflüsse, die sowohl den hohen wie auch den niedrigen Meßpegel gleichermaßen erhöhen oder verringern, werden kompensiert. Eine Nachregelung ist dazu nicht mehr erforderlich.

Um zu verhindern oder hinauszuzögern, daß das zum Beispiel durch Fremdlichteinfall verursachte Abdriften der Intensitätswerte zu keiner bzw. zu fehlerhafter Signalgebung führt, wird bei herkömmlichen Verfahren ein großer Kontrast in der Intensität des reflektierten Lichtes angestrebt. Dies ist bei dem erfindungsgemäßen Verfahren nicht erforderlich. Auch wenn die Oberfläche des rotierenden Körpers so stark verschmutzt, daß ihr Signal beziehungsweise die von der Sensoreinrichtung detektierte Intensität des von der Oberfläche reflektierten Lichtes nur wenig größer ist als das Signal aus dem Grund einer Bohrung oder bei einer durchgehenden Bohrung das Signal aus dem Hintergrund, reicht bereits eine kleine Differenz zwischen aufeinanderfolgend detektierten Meßpegeln aus, um eine anhaltend sichere Signalgebung zu erzielen. Wird ein bestimmter relativ geringer Differenzwert erreicht, erfolgt jeweils ein entsprechendes Signal, wie zum Beispiel ein Zählimpuls. Eine nach dem erfindungsgemäßen Verfahren arbeitende Sensoreinrichtung ermöglicht auch noch eine fehlerfreie Signalgebung bei Differenzwerten, die wesentlich geringer sind als die bei herkömmlichen, insbesondere mit zwei Schwellenwerten arbeitenden Verfahren erforderlichen Abstände zwischen den unterschiedlichen Helligkeitswerten.

Die Meßpegel werden bevorzugt durch Mittelwertbildung aus aufeinanderfolgend detektierten Intensitätswerten und insbesondere dann erzeugt, wenn nach einer Aufeinanderfolge mit gleicher Tendenz voneinander abweichender Intensitätswerte mehrere gleiche Intensitätswerte oder mit relativ dazu geringer Abweichung voneinander folgen. Dadurch werden die Meßpegel zutreffend erfasst und falsche Signalgebung durch detektierte und zwischen den Meßpegeln liegende einzelne Intensitätswerte vermieden.

Mit der vorzugsweisen Emittierung eines Laserlichtstrahles durch die Lichtquelle wird ein möglichst genaues Messen erreicht, da der Querschnitt des Lichtstrahles sehr klein gewählt werden kann. Die Wellenlänge des Lichtstrahles liegt bevorzugt im Bereich des sichtbaren Rotlichtes, insbesondere bei 670 nm. Durch das lichtabsorbierende Verhalten von Verschmutzungen wie zum Beispiel Faserstaub, das bei Rotlicht beziehungsweise bei Rotlicht eines Laserlichtstrahls besonders ausgeprägt auftritt, kann auch bei wachsender Verschmutzung des Körpers eine für eine fehlerfreie Signalgebung ausreichende Differenz zwischen den Meßpegeln sichergestellt werden. Ein zusätzlicher Vorteil des Rotlichtes liegt in der Sichtbarkeit, die ermöglicht, daß zum Ausrichten des Sensors bei der Montage keine zusätzlichen Mittel, wie Hilfslichtquellen oder mechanische Lehren, benötigt werden.

Bei Beginn der Drehbewegung des rotierenden Körpers dienen vorteilhaft die ersten, insbesondere die ersten drei detektierten Differenzwerte, zur Einregelung der Signalgebung und werden nicht zur Bestimmung einer Drehzahl ausgewertet. Damit wird bereits mit den ersten ausgewerteten Differenzwerten eine zuverlässige Drehzahlbestimmung erreicht.

Vorzugsweise ist die Lichtquelle als Halbleiterlaservorrichtung ausgebildet. Mit der Halbleiterlaservorrichtung kann die zur ausreichenden Meßsicherheit erforderliche Sendelichtintensität auf kleinem Bauraum erzeugt werden. Die bevorzugte Anordnung der Sensoreinrichtung und der Auswerteeinrichtung in einem gemeinsamen Gehäuse ermöglicht eine kompakte Bauform und eine einfache Montage.

Das erfindungsgemäße Verfahren zur berührungslosen Drehzahlmessung rotierender Körper erhöht die Meßsicherheit und vermeidet fehlerhafte Signalgebung.

Die Erfindung wird im folgenden anhand von Ausführungsbeispielen näher erläutert. Es zeigen:

Fig. 1     eine Meßanordnung mit einer im Schnitt dargestellten Stützscheibe, einer Laservorrichtung sowie einer Sensoreinrichtung,

Fig. 2     eine schematische Darstellung der durch die gemessenen Werte der Lichtintensität gebildeten Meßpegel in Abhängigkeit von der Zeit.

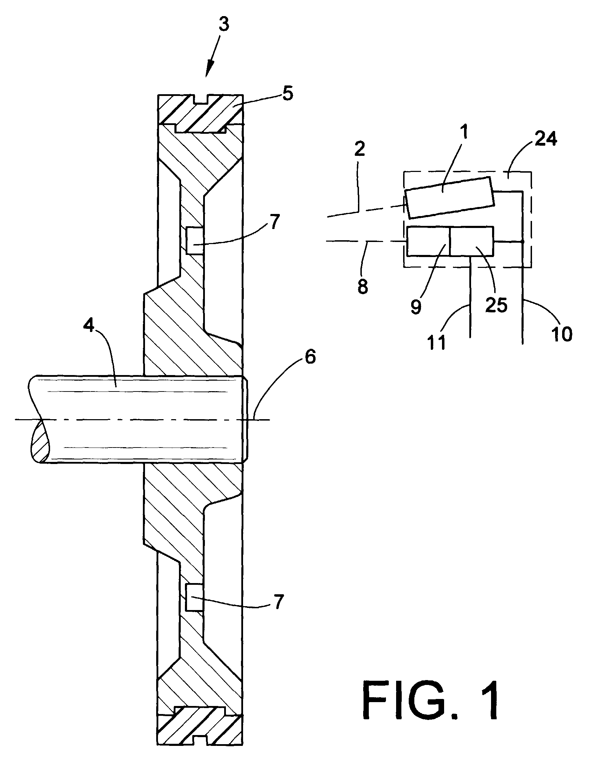

Eine als Halbleiterlaservorrichtung ausgebildete Lichtquelle 1 richtet, wie in Fig. 1 dargestellt, einen Laserlichtstrahl 2 auf eine Stützscheibe 3. Die auf einem Wellenende 4 befestigte Stützscheibe 3 trägt auf dem Umfang einen Laufbelag 5, der in bekannter Weise zur Lagerung der hier zur Vereinfachung nicht dargestellten Rotorwelle dient. Die Stützscheibe 3 weist konzentrisch um die Rotationsachse 6 angeordnete, als Sackloch ausgebildete Bohrungen 7 auf, die bei rotierender Stützscheibe 3 den Meßbereich, auf den der Laserlichtstrahl 2 ausgerichtet ist, durchlaufen. Der Laserlichtstrahl 2 wird von der Oberfläche der Stützscheibe 3 reflektiert und als Streulichtreflexstrahl 8 von einer Sensoreinrichtung 9 empfangen. Bei jedem Durchlauf einer Bohrung 7 durch den Meßbereich trifft der Laserlichtstrahl 2 in der Bohrung 7 auf eine Oberfläche mit einem von der Oberfläche der Stützscheibe 3 abweichendem Reflexionsverhalten, und damit verändert sich die Intensität beziehungsweise der von den detektierten Intensitätswerten jeweils erzeugte Meßpegel des von der Sensoreinrichtung 9 empfangenen Streulichtreflexstrahles 8.

Die Leitung 10 dient der Stromversorgung der Lichtquelle 1, der Sensoreinrichtung 9 und einer Auswerteeinrichtung 25. Die Auswerteeinrichtung 25 wertet die erkannten Intensitätsdifferenzen für eine Signalabgabe aus. Lichtquelle 1, Sensoreinrichtung 9 und Auswerteeinrichtung 25 sind in einem gemeinsamen Gehäuse 24 angeordnet. Die Leitung 11 dient der Signalgebung.

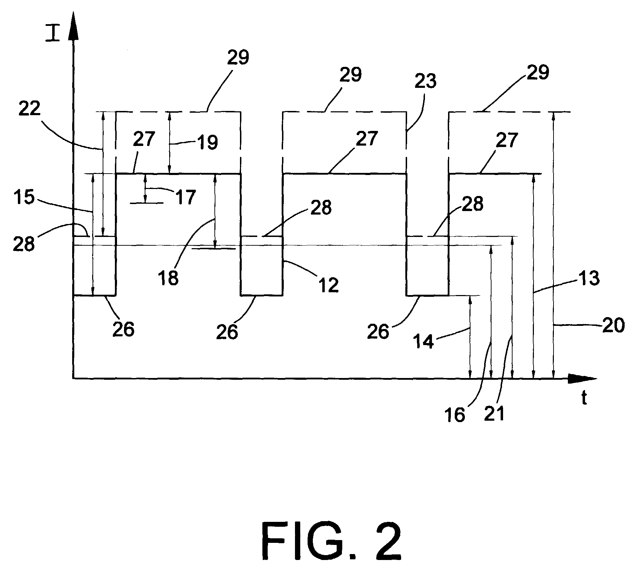

In der schematischen Darstellung der Fig. 2 bewegt sich die von der Sensoreinrichtung 9 jeweils gemessene Intensität des Streulichtreflexstrahles 8, als idealisiert dargestellter Kurvenverlauf 12 über die Zeit t aufgetragen, zwischen einem hohen Meßpegel 27 mit dem Intensitätswert $I_{1H}$ 13 und einem niedrigen Meßpegel 26 mit dem Intensitätswert $I_{1D}$ 14. Der hohe, über einem längeren Zeitraum aufgetragene Meßpegel 27 wird aus den durch das Reflexionsverhalten der glatten Oberfläche der Stützscheibe 3 erzeugten Intensitätswerten $I_{1H}$ 13 gebildet, der niedrige, nur über einem kurzen Zeitraum aufgetragene Meßpegel 26 wird aus den durch das Reflexionsverhalten der Oberfläche der Bohrungen 7 erzeugten Intensitätswerten $I_{1D}$ 14 gebildet. Abweichungen vom durchschnittlichen Intensitätswert des jeweiligen Meßpegels, wie sie durch Schwankungen im Reflexionsverhalten der jeweiligen Oberfläche in geringer Höhe entstehen können, sind in der Darstellung nicht berücksichtigt. Zwischen den aus den Intensitätswerten $I_{1H}$ 13 des von der Oberfläche der Stützscheibe 3 und den Intensitätswerten $I_{1D}$ 14 des von von der Oberfläche der Bohrungen 7 reflektierten Lichtes gebildeten Meßpegeln 26, 27 in unterschiedlicher Höhe ist ein Differenzwert $\Delta I_1$ 15 entstanden nach der Gleichung

$$I_{1H} - I_{1D} = \Delta I_1 .$$

Gemäß dem Stand der Technik wird zum Beispiel ein der Drehzahlmessung dienendes Zählsignal dadurch erzeugt, daß nach dem Detektieren des Intensitätswertes $I_{1H}$ 13, der oberhalb des Schwellenwertes $I_{SW}$ 16 liegt, der Intensitätswert $I_{1D}$ 14 detektiert wird, der unterhalb des Schwellenwertes $I_{SW}$ 16 liegt und somit eine Unterschreitung des Schwellenwertes $I_{SW}$ 16 registriert wird.

Erfindungsgemäß wird ein der Drehzahlmessung dienendes Zählsignal dann erzeugt, wenn, unabhängig von der absoluten Höhe der jeweiligen Meßpegel, der Differenzwert $\Delta I_1$ 15 den Wert $I_A$ 17 erreicht oder überschreitet. Der Wert $I_A$ 17 kann wie Fig. 2 zeigt, wesentlich kleiner gewählt werden als der zum Unterschreiten des Schwellenwertes $I_{SW}$ 16, ausgehend von dem Niveau des Meßpegels 27 mit dem Intensitätswert $I_{1H}$ 13, mindestens erforderliche Differenzwert $\Delta I_{min}$ 18 beziehungsweise der dargestellte Differenzwert $\Delta I_1$ 15. Damit wird eine höhere Sicherheit, zum Beispiel bei der Zählsignalgebung für die Drehzahlmessung, erzielt.

Erhöht sich beispielsweise durch Fremdlichteinfall mit dem Intensitätswert $I_F$ 19 sowohl der Intensitätswert $I_{1H}$ 13 des hohen Meßpegels 27 auf den Intensitätswert $I_{2H}$ 20 des Meßpegels 29 und als auch der Intensitätswert $I_{1D}$ 14 des niedrigeren Meßpegels 26 auf den Intensitätswert $I_{2D}$ 21 des Meßpegels 28, wie durch den gestrichelt ausgeführten Kurvenverlauf 23 dargestellt, hat der Differenzwert $\Delta I_2$ 22 den gleichen Betrag wie der Differenzwert $\Delta I_1$ 15 beibehalten gemäß der Gleichung

$$\Delta I_1 = I_{1H} - I_{1D} = (I_{1H} + I_F) - (I_{1D} + I_F) = I_{2H} - I_{2D} = \Delta I_2 .$$

Der Fremdlichteinfall bewirkt beim bekannten Verfahren, daß sogar der niedrigere Intensitätswert $I_{2D}$ 21 den Schwellenwert $I_{SW}$ 16 nicht mehr unterschreitet beziehungsweise der Schwellenwert $I_{SW}$ 16 nicht mehr passiert wird. Eine Zählsignalgebung findet daher auch nicht mehr statt. Der Schwellenwert $I_{SW}$ 16 muß neu eingestellt beziehungsweise nachgeregelt werden, um wieder eine korrekte Drehzahlmessung zu erhalten.

Bei dem erfindungsgemäßen Verfahren findet auch bei Fremdlichteinfall weiterhin eine korrekte Drehzahlmessung statt, da der Differenzwert $\Delta I_2$ 22 größer als der Wert $I_A$ 17 geblieben ist.

Entsprechendes gilt, wenn das Meßsystem so ausgebildet ist, daß Zählimpulse durch den Wechsel zum hohen statt durch den Wechsel zum niedrigen Meßpegel ausgelöst werden oder wenn der von der Sensoreinrichtung 9 empfangene Intensitätswert des Lichtes unter dem Einfluß der Verschmutzung von Bauteilen wie zum Beispiel der Lichtquelle 1, die dadurch weniger Licht emittiert, gemindert wird.

**Patentansprüche**

1. Verfahren zur berührungslosen Drehzahlmessung eines rotierenden Körpers, bei dem ein von einer Lichtquelle (1) erzeugter Lichtstrahl ausgesendet und als vom rotierenden Körper reflektiertes Licht von einer Sensoreinrichtung (9) detektierbar ist, wobei die detektierten Intensitätswerte des reflektierten Lichtes durch entlang der Meßstrecke unterschiedliches Reflexionaverhalten der jeweils vom Lichtstrahl erfaßten Oberfläche Signale bilden und für die Drehzahlermittlung ausgewertet werden
dadurch gekennzeichnet,
daß das Signal aus dem zwischen aufeinanderfolgend detektierten Meßpegeln (26,27;28,29) ermittelten Differenzwert (15, 22) generiert wird.

2. Verfahren nach Anspruch 1, dadurch gekennzeichnet, daß jeweils ein neuer Meßpegel (26,27;28,29) durch Mittelung und dann gebildet wird, wenn nach einer Aufeinanderfolge mit gleicher Tendenz voneinander abweichender Intensitätswerte mehrere gleiche Intensitätswerte oder mit relativ dazu geringer Abweichung voneinander folgen.

3. Verfahren nach Anspruch 1 oder 2, dadurch gekennzeichnet, daß die Lichtquelle (1) einen Laserlichtstrahl (2) emittiert.

4. Verfahren nach einem der Ansprüche 1 bis 3, dadurch gekennzeichnet, daß die Wellenlänge des Lichtstrahles im Bereich des sichtbaren Rotlichtes, insbesondere bei 670 nm, liegt.

5. Verfahren nach einem der Ansprüche 1 bis 4, dadurch gekennzeichnet, daß bei Beginn der Drehbewegung des rotierenden Körpers die ersten, insbesondere die ersten drei detektierten Differenzwerte (15, 22), der Einregelung der Signalgebung dienen und nicht zur Bestimmung einer Drehzahl ausgewertet werden.

6. Vorrichtung zur Ausführung des Verfahrens nach Anspruch 1, dadurch gekennzeichnet, daß die Vorrichtung Mittel zur Differenzwertbildung und davon abgeleiteten Erfassung inkrementaler Impulse sowie eine Auswerteeinrichtung (25) aufweist, die Drehzahlsignale bildet.

7. Vorrichtung zur Ausführung des Verfahrens nach Anspruch 6, dadurch gekennzeichnet, daß die Lichtquelle (1) als Halbleiterlaservorrichtung ausgebildet ist.

8. Vorrichtung zur Ausführung des Verfahrens nach Anspruch 6 oder 7, dadurch gekennzeichnet, daß die Sensoreinrichtung (9) und die Auswerteeinrichtung (25) in einem gemeinsamen Gehäuse (24) angeordnet sind.

FIG. 1

# FIG. 2